(19) Europäisches Patentamt / European Patent Office / Office européen des brevets

(11) **EP 4 353 691 A1**

(12) **EUROPEAN PATENT APPLICATION**
published in accordance with Art. 153(4) EPC

(43) Date of publication:
**17.04.2024 Bulletin 2024/16**

(21) Application number: **22820144.8**

(22) Date of filing: **02.06.2022**

(51) International Patent Classification (IPC):
**C03B 33/09** (2006.01)     **B23K 26/53** (2014.01)
**B26F 3/00** (2006.01)       **B28D 5/00** (2006.01)

(52) Cooperative Patent Classification (CPC):
**B23K 26/53; B26F 3/00; B28D 5/00; C03B 33/09**

(86) International application number:
**PCT/JP2022/022563**

(87) International publication number:
**WO 2022/259963 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 JP 2021098236**

(71) Applicant: **AGC INC.**
**Chiyoda-ku,**
**Tokyo 1008405 (JP)**

(72) Inventors:
• **FUJIWARA Takuma**
**Tokyo 100-8405 (JP)**
• **SAITO Isao**
**Tokyo 100-8405 (JP)**

(74) Representative: **Müller-Boré & Partner**
**Patentanwälte PartG mbB**
**Friedenheimer Brücke 21**
**80639 München (DE)**

(54) **GLASS ARTICLE MANUFACTURING METHOD, GLASS ARTICLE, COVER GLASS, AND DISPLAY DEVICE**

(57) The present invention relates to a glass article manufacturing method having the following steps (A) to (C). (A) A plurality of virtual lines parallel to each other are set on a main surface of a glass plate. (B) Each of the plurality of virtual lines is irradiated with a laser beam to form a modified portion in the glass plate along each of the plurality of virtual lines. (C) Stress is applied to the glass plate to cut the glass plate along the virtual lines. The interval between virtual lines which are adjacent to each other is at least 2.0 $\mu$m but less than 30 $\mu$m.

FIG. 8

EP 4 353 691 A1

**Description**

TECHNICAL FIELD

The present disclosure relates to a glass article manufacturing method, a glass article, a cover glass, and a display device.

BACKGROUND ART

Patent Literature 1 discloses a technique of irradiating a glass plate with laser light to form a modified portion inside the glass plate. The glass plate can be cut starting from the modified portion.

CITATION LIST

PATENT LITERATURE

Patent Literature 1: JP2013-536081A

SUMMARY OF INVENTION

TECHNICAL PROBLEM

In the related art, a stress required to cut a glass plate is high, and unintended chipping or cracking may occur. As a result, a quality of a glass article may deteriorate.
One aspect of the present disclosure provides a technique of reducing a stress required for cutting a glass plate and improving a quality of a glass article.

SOLUTION TO PROBLEM

A glass article manufacturing method according to one aspect of the present disclosure including the following (A) to (C):

(A) setting a plurality of virtual lines parallel to each other on a main surface of a glass plate;
(B) irradiating each of the plurality of virtual lines with laser light to form a modified portion in the glass plate along each of the plurality of virtual lines; and
(C) applying a stress to the glass plate to cut the glass plate along the virtual lines.

An interval between the adjacent virtual lines is 2.0 $\mu$m or more and less than 30 $\mu$m.

ADVANTAGEOUS EFFECTS OF INVENTION

According to one aspect of present disclosure, a plurality of virtual lines parallel to each other are set at an interval of 2.0 $\mu$m or more and less than 30 $\mu$m, and a modified portion is formed along each of the plurality of virtual lines. Accordingly, a pressure required for cutting a glass plate can be reduced, and a quality of a glass article can be improved.

BRIEF DESCRIPTION OF DRAWINGS

[FIG. 1] FIG. 1 is a flowchart showing a glass article manufacturing method according to an embodiment of the present invention.
[FIG. 2] FIG. 2 is a perspective view illustrating an example of S1 in FIG. 1.
[FIG. 3] FIG. 3 is a perspective view illustrating an example of S2 in FIG. 1.
[FIG. 4] FIG. 4 is a perspective view illustrating an example in the middle of S3 in FIG. 1.
[FIG. 5] FIG. 5 is a plan view illustrating an example when S3 in FIG. 1 is completed.
[FIG. 6] FIG. 6 is a plan view illustrating an example of S5 in FIG. 1.
[FIG. 7] FIG. 7 is a perspective view illustrating an example of a glass article obtained in S5 in FIG. 1.

[FIG. 8] FIG. 8 is a perspective view illustrating a modification of FIG. 4.

[FIG. 9] FIG. 9 a plan view illustrating an example of a virtual line including curved portions.

[FIG. 10] (A) in FIG. 10 is a side view illustrating an example of a four-point bending test, and (B) in FIG. 10 is a plan view illustrating an example of a test piece.

[FIG. 11] FIG. 11 is a diagram showing test results in Table 1.

[FIG. 12] FIG. 12 is a diagram showing test results in Table 2.

[FIG. 13] (A) in FIG. 13 is a microphotograph showing a test piece in Example 12, (B) in FIG. 13 is a microphotograph showing a test piece in Example 13, (C) in FIG. 13 is a microphotograph showing a test piece in Example 14, (D) in FIG. 13 is a microphotograph showing a test piece in Example 15, (E) in FIG. 13 is a microphotograph showing a test piece in Example 16, and (F) in FIG. 13 is a microphotograph showing a test piece in Example 17.

[FIG. 14] FIG. 14 is a diagram showing test results in Table 3.

[FIG. 15] (A) in FIG. 15 is a microphotograph showing a test piece in Example 19, (B) in FIG. 15 is a microphotograph showing a test piece in Example 20, (C) in FIG. 15 is a microphotograph showing a test piece in Example 21, (D) in FIG. 15 is a microphotograph showing a test piece in Example 22, (E) in FIG. 15 is a microphotograph showing a test piece in Example 23, and (F) in FIG. 15 is a microphotograph showing a test piece in Example 24.

[FIG. 16] FIG. 16 is a diagram showing test results in Table 4.

[FIG. 17] (A) in FIG. 17 is a photograph of a cut surface of the test piece in Example 1 observed with a microscope from above when irradiated with light from the side, and (B) in FIG. 17 is a photograph of a cut surface of a test piece in Example 6 observed with a microscope from above when irradiated with light from the side.

[FIG. 18] FIG. 18 is a cross-sectional view illustrating an example of a modified portion formed along a virtual line at a center and a modified portion formed along a virtual line around the center.

DESCRIPTION OF EMBODIMENTS

Hereinafter, embodiments of the present disclosure will be described with reference to the drawings. Note that in each drawing, the same reference numerals are given to the same or corresponding configurations, and descriptions thereof may be omitted. In addition, in the description, the expression "to" used to express a numerical range includes numerical values before and after it as a lower limit value and an upper limit value of the range, respectively.

A glass article manufacturing method according to the present embodiment includes: setting a plurality of virtual lines parallel to each other on a main surface of a glass plate; irradiating each of the plurality of virtual lines with laser light to form a modified portion in the glass plate along each of the plurality of virtual lines; and applying a stress to the glass plate to cut the glass plate along the virtual lines, in which an interval between the adjacent virtual lines is 2.0 $\mu$m or more and less than 30 $\mu$m.

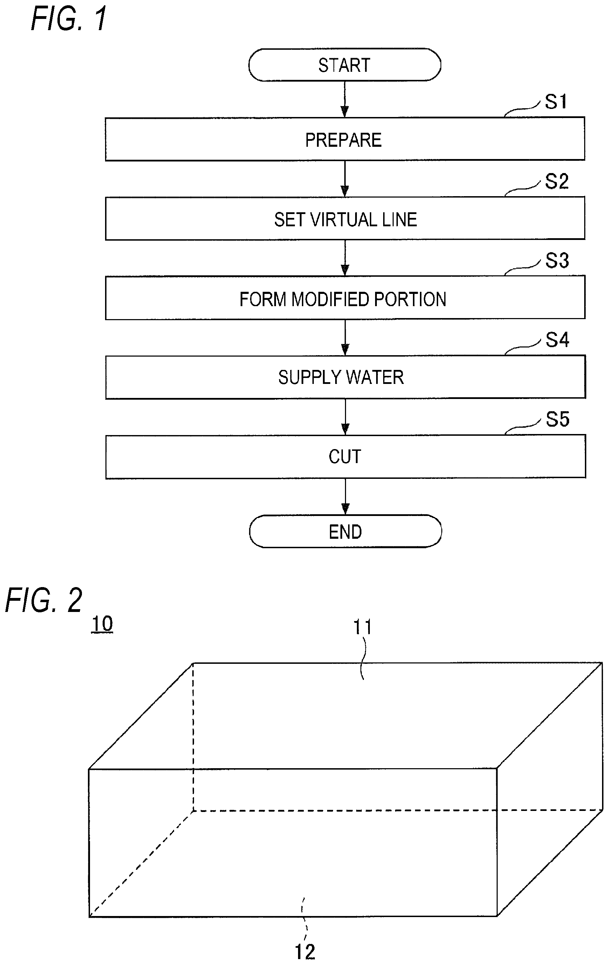

First, a glass article manufacturing method according to the present embodiment will be described with reference to FIG. 1 to FIG. 7. The glass article manufacturing method includes, for example, steps S1 to S5, as shown in FIG. 1. Note that it is sufficient that the glass article manufacturing method includes steps S1 to S3 and S5, and step S4 may not be included.

In step S1, a glass plate 10 is prepared. The glass plate 10 may be, for example, a flat plate as illustrated in FIG. 2, or may be a bent plate. In the case where the glass plate 10 is a flat plate, it may be bent after step S5. The glass plate 10 has a first main surface 11 and a second main surface 12 opposite to the first main surface 11.

The first main surface 11 and the second main surface 12 each have, for example, a rectangular shape. The first main surface 11 and the second main surface 12 may have a trapezoidal shape, a circular shape, an elliptical shape, or the like, and are not particularly limited.

Applications of the glass plate 10 include, for example, an automobile window glass, a construction window glass, a substrate for a display device, and a cover glass for a display device. The thickness of the glass plate 10 is appropriately set according to the application of the glass plate 10, and is, for example, 0.01 cm to 2.5 cm. In the case where the application of the glass plate 10 is a cover glass for an in-vehicle display device, the thickness of the glass plate 10 is preferably 0.2 mm or more, more preferably 0.8 mm or more, and still more preferably 1 mm or more. In the case where the application of the glass plate 10 is a cover glass for an in-vehicle display device, the thickness of the glass plate 10 is, for example, 5 mm or less, preferably 3 mm or less, and more preferably 2 mm or less.

After step S5, the glass plate 10 may be laminated with another glass plate via an intermediate film to be used as a laminated glass. In addition, the glass plate 10 may be subjected to a tempering treatment after step S5 to be used as a tempered glass.

The glass plate 10 is, for example, a soda-lime glass, an alkali-free glass, or a glass for chemical strengthening. The glass for chemical strengthening is used, for example, as a cover glass after being chemically strengthened. The glass plate 10 may be a glass for air-tempering.

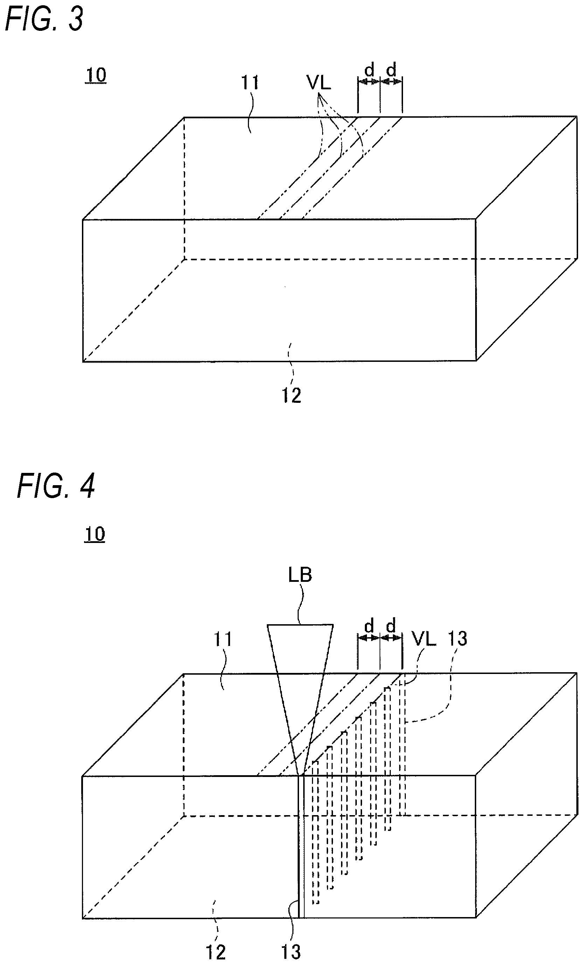

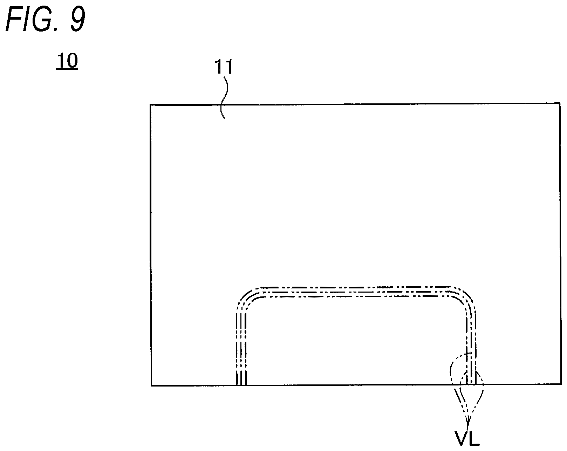

In step S2, as illustrated in FIG. 3, a plurality of virtual lines VL parallel to each other are set on the first main surface 11 of the glass plate 10. Setting of each virtual line VL is performed by using a laser processing apparatus. Each virtual line VL separates the first main surface 11 into two regions. Each virtual line VL may have only a straight portion as illustrated in FIG. 3, may have a straight portion and a curved portion as illustrated in FIG. 9, or may have only a curved portion.

The plurality of virtual lines VL may be disposed at an equal pitch as illustrated in FIG. 3, or may be disposed at unequal pitches, and are preferably disposed at an equal pitch. The interval d between adjacent virtual lines VL is 2.0 μm or more and less than 30 μm. In the case where d is 2.0 μm or more and less than 30 μm, a stress required for cutting the glass plate 10 can be reduced to be described in the Examples section. Therefore, occurrence of unintended chipping or cracking can be prevented, and a quality of a glass article can be improved.

The effect of improving the quality of the glass article is greatly obtained in the case where the virtual line VL has a curved portion having a curvature radius of 200 mm or less. Even in the case where the curvature radius of the curved portion is 200 mm or less, if the stress required for cutting the glass plate 10 is low, a direction of crack propagation is likely to change along the virtual line VL. The curvature radius of the curved portion is preferably 50 mm or less. In addition, the curvature radius of the curved portion is preferably 1 mm or more.

The interval d between the adjacent virtual lines VL is preferably 29 μm or less, more preferably 25 μm or less, still more preferably 20 μm or less, particularly preferably less than 20 μm, and extremely preferably 18 μm or less. The interval d between the adjacent virtual lines VL is preferably 2.5 μm or more, more preferably more than 3.5 μm, and still more preferably 7.0 μm or more.

The number n of the virtual lines VL may be an even number of 2 or more, or an odd number of 3 or more, and is preferably an odd number of 3 or more. In the case where n is an odd number of 3 or more, one virtual line VL is present at a center of the plurality of virtual lines VL. Therefore, as to be described in the Examples section, when cutting the glass plate 10 in step S5, the glass plate 10 can be cut at the virtual line VL at the center. That is, in the case where n is an odd number of 3 or more, the cutting position can be determined.

In the case where the number n of the virtual lines VL is an odd number of 3 or more, with one virtual line VL at the center, the remaining virtual lines VL may be disposed symmetrically, as illustrated in FIG. 3. The above disposition makes it easy to apply a high stress to the virtual line VL at the center, and the glass plate 10 is easily cut at the virtual line VL at the center.

The plurality of virtual lines VL may be disposed at an equal pitch, as illustrated in FIG. 3. Note that in the case where the number n of the virtual lines VL is an odd number of 5 or more, only when the remaining virtual lines VL are disposed symmetrically with one virtual line VL at the center, the plurality of virtual lines VL may be disposed at unequal pitches.

As the number n of the virtual lines VL increases, the number of modified portions 13 formed in step S3 increases. From the viewpoint of reducing the number of the modified portions 13, the number n of the virtual lines VL is preferably 3 or 5.

In step S3, as illustrated in FIG. 4, each of the plurality of virtual lines VL is irradiated with laser light LB to form the modified portion 13 in the glass plate 10 along each of the plurality of virtual lines VL. The plurality of virtual lines VL may be irradiated at the same time with a plurality of beams of laser light LB, or the plurality of virtual lines VL may be irradiated with single laser light LB in order. With the laser light LB, the modified portion 13 is formed by nonlinear absorption, for example.

The nonlinear absorption is also called multiphoton absorption. The probability that the multiphoton absorption occurs is nonlinear with respect to a photon density (a power density of the laser light LB), and the higher the photon density, the higher the probability dramatically. For example, the probability that two-photon absorption occurs is proportional to a square of the photon density.

The laser light LB is, for example, pulsed light. As the pulsed light, it is preferable to use a pulsed laser light having a wavelength range of 250 nm to 3000 nm and a pulse width of 10 fs to 1000 ns. Since the laser light having a wavelength range of 250 nm to 3000 nm is transmitted through the glass plate 10 to some extent, nonlinear absorption can occur inside the glass plate 10 to form the modified portion 13. The wavelength range is preferably 260 nm to 2500 nm. In addition, in the case where the pulsed laser light has a pulse width of 1000 ns or less, the photon density can be easily increased, and nonlinear absorption can occur inside the glass plate 10 to form the modified portion 13. The pulse width is preferably 100 fs to 100 ns.

The modified portion 13 is, for example, a glass having a changed density or refractive index. The modified portion is a layer whose density or refractive index is changed, either by a structural change or by melting and re-solidification. The modified portion 13 may include voids.

The laser light LB is, for example, linearly focused inside the glass plate 10 to form the modified portion 13 linearly. A light source of the laser light LB may output a pulse group called bursts. One pulse group has a plurality of (for example, 3 to 50) beams of pulsed light, and each pulsed light has a pulse width of less than 10 nanoseconds. In one pulse group, energy of the pulsed light may gradually decrease.

The pulsed light may be linearly focused by self-focusing due to the nonlinear Kerr effect. Note that the pulsed light may be linearly focused by using an optical system. As a specific optical system, for example, an optical system using an Axikon lens, an optical system using a birefringent material, an optical system using a diffractive optical element, or an optical system using optical aberration can be used.

For example, as illustrated in FIG. 4, the modified portion 13 is formed over an entire plate thickness direction from the first main surface 11 to the second main surface 12. The modified portion 13 may be formed only partially in the plate thickness direction, and may be formed, for example, only on a first main surface 11 side from the center of the plate thickness as a reference.

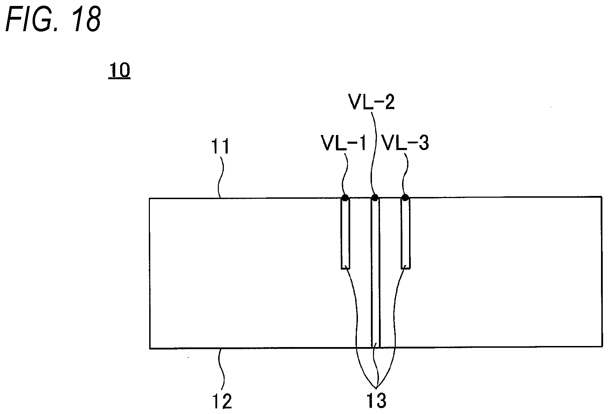

In the case where the number n of the virtual lines VL is 3, for example, as illustrated in FIG. 18 that is the case where n is 3, in at least one virtual line VL-2 at the center, the modified portion 13 is preferably formed continuously or intermittently (continuously in FIG. 18) in a range of 50% to 100% of the plate thickness of the glass plate 10. In the case where the range in which the modified portion 13 is formed is within the above range, the stress required for cutting can be easily reduced. In the virtual line VL-2 at the center, the range in which the modified portion 13 is formed is more preferably in a range of 75% to 100% of the plate thickness of the glass plate 10, and more preferably in a range of 100% of the plate thickness of the glass plate 10. In addition, as illustrated in FIG. 18, the modified portion 13 is preferably formed starting from the first main surface 11. In this case, it is preferable that the modified portion is formed in the range described above with the second main surface 12 as 0% and the first main surface 11 as 100% in the plate thickness direction.

On the other hand, in the case where the number n of the virtual lines VL is 3 or more, in virtual lines VL-1 and VL-3 around the center, the modified portion 13 is preferably formed continuously or intermittently (continuously in FIG. 18) in a range of 10% to 100% of the plate thickness of the glass plate 10. In the case where the range in which the modified portion 13 is formed is within the above range, the stress required for cutting can be easily reduced. In the virtual lines VL-1 and VL-3 around the center, the range in which the modified portion 13 is formed may be a range of 100%, may be a range of less than 100%, may be a range of 75% or less, may be a range of 50% or less, and may be a range of 30% or less, of the plate thickness of the glass plate 10.

In the case where the number n of the virtual lines VL is 3 or more, for example, as illustrated in FIG. 18 that is the case where n is 3, the modified portion 13 is preferably formed continuously or intermittently in a shorter range in the plate thickness direction of the glass plate 10 in the virtual lines VL-1 and VL-3 around the center than the at least one virtual line VL-2 at the center. In the case where the virtual lines VL-1 and VL-3 around the center have the modified portion 13 in a shorter range in the plate thickness direction than the at least one virtual line VL-2 at the center, a laser output required for processing can be reduced, and costs can be reduced. Further, a plurality of modified portions 13 can be processed at the same time by using an optical system that splits one laser into a plurality of parts, and the processing time can be shortened.

In the case where the number n of the virtual lines VL is 3 or more and is an odd number, the virtual line VL at the center means the ((n+1)/2)th virtual line counted from one end. In addition, in the case where the number n of the virtual lines VL is 4 or more and is an even number, the virtual line VL at the center means both the (n/2)th and (n/2+1)th virtual lines counted from one end.

In the case where the number n of the virtual lines VL is 4 or more and is an even number, although not illustrated, the modified portion 13 is preferably formed continuously or intermittently in a shorter range in the plate thickness direction of the glass plate 10 in one virtual line VL at the center than another virtual line VL at the center. With the above configuration, the glass plate 10 can be cut along a desired virtual line VL at the center out of the two virtual lines VL at the center.

The light source of the laser light LB may include, for example, a Nd-doped YAG crystal (Nd:YAG) and output a pulsed light having a wavelength of 1064 nm. Note that the wavelength of the pulsed light is not limited to 1064 nm. A Nd:YAG second harmonic laser (wavelength: 532 nm), a Nd:YAG third harmonic laser (wavelength: 355 nm), or the like can also be used.

The first main surface 11 is irradiated with the laser light LB by using an optical system including a condenser lens and the like. By moving the irradiation point along the virtual line VL, the modified portion 13 can be formed over the entire virtual line VL.

A 2D galvano scanner or a 3D galvano scanner, for example, is used for moving the irradiation point. The movement of the irradiation point may be implemented by a movement or rotation of a stage for holding the glass plate 10. As the stage, for example, an XY stage, an XYθ stage, an XYZ stage, or an XYZθ stage can be used. X axis, Y axis and Z axis are orthogonal to each other, the X axis and the Y axis are parallel to the first main surface 11, and the Z axis is perpendicular to the first main surface 11.

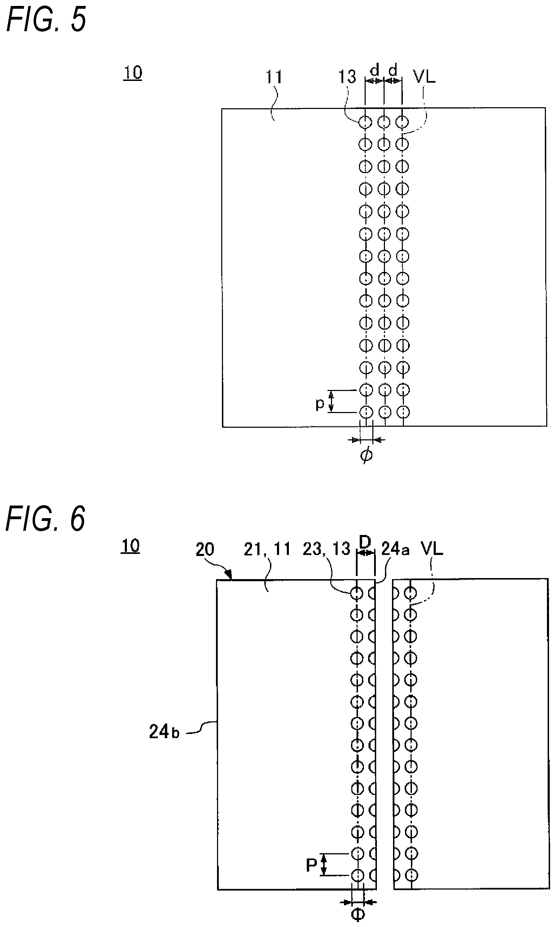

As illustrated in FIG. 5, a plurality of modified portions 13 may be formed at a pitch p of 0.1 μm or more and 100 μm or less along the virtual line VL. The pitch p is an average value of intervals between centers of 10 sets of arbitrary selected adjacent modified portions 13. In the case where the pitch p is 100 μm or less, the occurrence of unintended chipping or cracking can be prevented in step S5. In the case where the pitch p is 0.1 μm or more, the number of the modified portions 13 can be reduced. The pitch p is preferably 2 μm or more. The pitch p is preferably 60 μm or less, more preferably 40 μm or less, still more preferably 20 μm or less, and particularly preferably 10 μm or less.

As illustrated in FIG. 5, when viewed from a direction perpendicular to the first main surface 11, the diameter φ of the modified portion 13 is, for example, 0.1 μm or more and less than 60 μm. In the case where the diameter φ is less than 60 μm, the glass plate 10 can be accurately cut along the virtual line VL in step S5. In the case where the diameter φ is 0.1 μm or more, the glass plate 10 is easily cut at the virtual line VL. The diameter φ is preferably 2 μm or more. The diameter φ is preferably 40 μm or less, more preferably 20 μm or less, and still more preferably 10 μm or less.

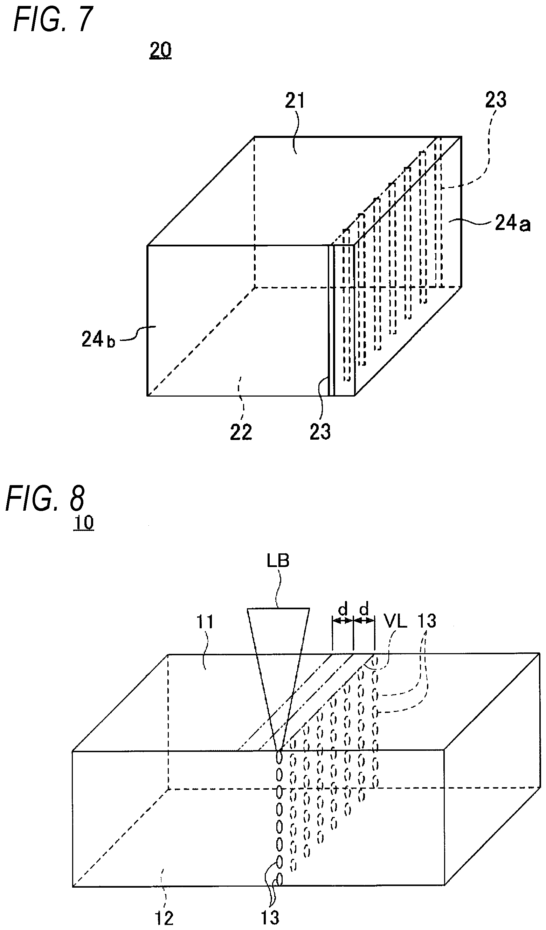

The plurality of modified portions 13 may be formed at intervals in the plate thickness direction from the virtual line VL, as illustrated in FIG. 8. In this case, as illustrated in FIG. 8, the laser light LB may be condensed into a dot shape inside the glass plate 10 to form the modified portions 13 in a dot shape. The light source of the laser light LB outputs a single pulsed light or a pulse group. The light wavelength, pulse width, etc. are adjusted such that multiphoton absorption occurs only near a focal point.

As illustrated in FIG. 8, in the case of forming the modified portion 13 in a dot shape, twodimensional movement of the focal point in a plane with a constant depth from the first main surface 11 and change of the depth of the focal point from the first main surface 11 are repeated to form the plurality of modified portions 13. An XYZ stage, an XYZθ stage, or a 3D galvano scanner, for example, is used to move the focal point. In the case of changing the depth of the focal point by moving the stage, a 2D galvano scanner may be used.

In step S4, water is supplied to the virtual line VL of the glass plate 10 although not illustrated. Water is supplied, for example, in a liquid state. Liquid water may be supplied in bulk or may be supplied in mist. Water may be supplied in a gas state. By supplying water, a bonding force of the glass can be reduced, and the stress required for cutting the glass plate 10 in step S5 can be reduced. The water supplied to the virtual line VL of the glass plate 10 may be removed before step S5.

In step S5, a stress is applied to the glass plate 10 to cut the glass plate 10 along the virtual line VL, as illustrated in FIG. 6. The glass plate 10 is cut starting from the modified portion 13. For example, a roller is moved along the virtual line VL while pressing against the glass plate 10 to apply a stress to the glass plate 10. Alternatively, although not illustrated, spot light as second laser light may be formed on the first main surface 11, and the spot light is moved along the virtual line VL to apply a thermal stress to the glass plate 10.

The second laser light causes mainly linear absorption by irradiating the glass plate 10. The expression "causing mainly linear absorption" means that the amount of heat generated by linear absorption is greater than the amount of heat generated by nonlinear absorption. The nonlinear absorption may seldom occur.

The linear absorption is also called one-photon absorption. The probability that the one-photon absorption occurs is proportional to the photon density. In the case of the one-photon absorption, the following equation (1) holds according to the Lambert-Beer's law.

$$I = I_0 \times \exp(-\alpha \times L) \qquad (1)$$

In the above equation (1), $I_0$ is an intensity of the second laser light on the first main surface 11, I is an intensity of the second laser light on the second main surface 12, L is a propagation distance of the second laser light from the first main surface 11 to the second main surface 12, and $\alpha$ is an absorption coefficient of the glass for the second laser light. $\alpha$ is an absorption coefficient of linear absorption, which is determined by the wavelength of the second laser light, the chemical composition of the glass, and the like.

In the case where the temperature of the glass exceeds an annealing point, plastic deformation of the glass tends to proceed, limiting generation of the thermal stress. Therefore, the light wavelength, output, beam diameter on the first main surface 11, etc. are adjusted such that the temperature of the glass is lower than or equal to the annealing.

The second laser light is, for example, continuous wave light. The light source of the second laser light is not particularly limited, and is, for example, a carbon dioxide laser. The carbon dioxide laser outputs continuous wave light having a wavelength of 10600 nm, for example. Note that the second laser light may be a pulsed light instead of the continuous wave light.

The spot light of the second laser light may be formed on the first main surface 11 so as to straddle all virtual lines VL. The spot light of the second laser light may have a circular shape on the first main surface 11. The diameter thereof is, for example, 1 mm to 10 mm.

After step S5, a glass article 20 is obtained. The glass article 20 is a glass article 20 having a main surface, an end surface, and a plurality of modified portions at a constant distance from at least one end surface among the end surface, in which an interval between the end surface at the constant distance from the plurality of modified portions and a center of the modified portions is 2.0 μm or more and less than 30 μm when viewed in a direction perpendicular to the main surface. Note that, the "at least one end surface" is an end surface formed by cutting the glass plate 10 along the virtual line.

More specifically, for example, as illustrated in FIG. 6 and FIG. 7, the glass article 20 has a first main surface 21, a second main surface 22 opposite to the first main surface 21, and four end surfaces 24 perpendicular to the first main surface 21 and the second main surface 22. The end surface 24 may be a flat surface or a curved surface. The number of the end surfaces 24 is not limited to four, and may be plural or one. The end surface 24 includes at least one end surface 24a formed by cutting the glass plate 10, and may further include an end surface 24b other than the at least one end surface 24a formed by cutting the glass plate 10, that is, the end surface 24b identical to an end surface originally provided on the glass plate 10.

The glass article 20 includes a plurality of modified portions 23 at a constant distance from the at least one end surface 24a. The modified portion 23 is, for example, the modified portion 13 formed in step S3. The modified portion 13 may also remain on the at least one end surface 24a.

Note that the modified portion 23 may be formed by cutting out the glass article 20 by a known method and then irradiating the glass article 20 with the laser light LB. The glass article 20 may include a plurality of modified portions 23 at a constant distance from the at least one end surface 24a, and may not include the modified portion 23 on the at least one end surface 24a.

When viewed from a direction perpendicular to the first main surface 21, the interval D between an end surface at a constant distance from the plurality of modified portions, that is, between the at least one end surface 24a and a center of the modified portion 23 is 2.0 $\mu$m or more and less than 30 $\mu$m.

As will be described in detail in the Examples section, in the case where D is 2.0 $\mu$m or more and less than 30 $\mu$m, when the at least one end surface 24a is irradiated with light from a side with the first main surface 21 facing upward, a contour of the end surface 24a can be clearly observed from above. Note that the expression "from a side" means a direction perpendicular to the plate thickness direction. This is because the plurality of modified portions 23 scatter light. Since the contour of the at least one end surface 24a can be clearly observed, it is suitable for quality control of the end surface, and in the case where the glass of the present embodiment is used as a cover glass for a display device, for example, a recognition system with a camera or the like is improved in subsequent processing steps, which leads to an improvement of processing position accuracy.

In the case where the plurality of modified portions 23 are present at different distances from the at least one end surface 24a, such as the case where 5 virtual lines are formed in step S2 and then the glass plate is cut, it is sufficient that the center of the plurality of modified portions 23 closest to the at least one end surface 24a is spaced from the at least one end surface 24a by an interval of 2.0 $\mu$m or more and less than 30 $\mu$m.

The interval D is preferably 29 $\mu$m or less, more preferably 25 $\mu$m or less, still more preferably 20 $\mu$m or less, particularly preferably less than 20 $\mu$m, and extremely preferably 18 $\mu$m or less. In addition, the interval D is preferably 2.5 $\mu$m or more, and more preferably 7.0 $\mu$m or more.

The glass article 20 may include the plurality of modified portions 23 at a pitch P of 0.1 $\mu$m or more and 100 $\mu$m or less along the at least one end surface 24a when viewed from the direction perpendicular to the first main surface 21. The pitch P is an average value of intervals between centers of 10 sets of arbitrary selected adjacent modified portions 23. In the case where the pitch P is 100 $\mu$m or less, the contour of the at least one end surface 24a is easily observed. In the case where the pitch P is 0.1 $\mu$m or more, the number of the modified portions 23 can be reduced. The pitch P is preferably 2 $\mu$m or more. The pitch P is preferably 60 $\mu$m or less, more preferably 40 $\mu$m or less, still more preferably 20 $\mu$m or less, and particularly preferably 10 $\mu$m or less.

When viewed from the direction perpendicular to the first main surface 11, the diameter $\Phi$ of the modified portion 23 is, for example, 0.1 $\mu$m or more and less than 60 $\mu$m. In the case where the diameter $\Phi$ is less than 60 $\mu$m, light can be scattered along the contour of the at least one end surface 24a. In the case where the diameter $\Phi$ is 0.1 $\mu$m or more, light can be scattered. The diameter $\Phi$ is preferably 2 $\mu$m or more. The diameter $\Phi$ is preferably 40 $\mu$m or less, more preferably 20 $\mu$m or less, and still more preferably 10 $\mu$m or less.

When viewed in the direction perpendicular to the first main surface 11, the at least one end surface 24a may have a curved portion having a curvature radius of 200 mm or less. The curvature radius of the curved portion is preferably 50 mm or less. In addition, the curvature radius of the curved portion is preferably 1 mm or more.

The glass article 20 may be used as part of a display device, for example, may be used as a cover glass. An antireflection film may be formed on a surface of the cover glass. The antireflection film prevents reflection of light, and is obtained by, for example, alternately laminating a high refractive index layer and a low refractive index layer having a refractive index lower than that of the high refractive index layer. The material of the high refractive index layer is, for example, niobium oxide, titanium oxide, zirconium oxide, tantalum oxide, or silicon nitride. On the other hand, the material of the low refractive index layer is, for example, silicon oxide, a mixed oxide of Si and Sn, a mixed oxide of Si and Zr, or a mixed oxide of Si and Al.

As described above, the following matters are disclosed in the present description.

[1] A glass article manufacturing method including:

setting a plurality of virtual lines parallel to each other on a main surface of a glass plate;
irradiating each of the plurality of virtual lines with laser light to form a modified portion in the glass plate along each of the plurality of virtual lines; and
applying a stress to the glass plate to cut the glass plate along the virtual lines, in which
an interval between the adjacent virtual lines is 2.0 $\mu$m or more and less than 30 $\mu$m.

[2] The glass article manufacturing method according to [1], in which the interval between the adjacent virtual lines is 2.0 $\mu$m or more and less than 20 $\mu$m.

[3] The glass article manufacturing method according to [1] or [2], in which the number of the virtual lines is an odd number of 3 or more.

[4] The glass article manufacturing method according to [3], in which the number of the virtual lines is 3 or 5.

[5] The glass article manufacturing method according to [3] or [4], in which sandwiching one of the virtual lines, the remaining virtual lines are disposed symmetrically.

[6] The glass article manufacturing method according to any one of [1] to [5], in which the plurality of virtual lines are disposed at an equal pitch.

[7] The glass article manufacturing method according to any one of [1] to [6], further including:
supplying water to the virtual lines after forming the modified portion and before cutting the glass plate.

[8] The glass article manufacturing method according to any one of [1] to [7], in which a plurality of the modified portions are formed at an interval in a plate thickness direction of the glass plate.

[9] The glass article manufacturing method according to any one of [1] to [8], in which a plurality of the modified portions are formed at a pitch of 0.1 $\mu$m or more and 100 $\mu$m or less along the virtual lines.

[10] The glass article manufacturing method according to any one of [1] to [9], in which the modified portion has a diameter of 0.1 $\mu$m or more and less than 60 $\mu$m when viewed from a direction perpendicular to the main surface.

[11] The glass article manufacturing method according to any one of [1] to [10], in which the number of the virtual lines is 3 or more, and the modified portion is formed continuously or intermittently in a shorter range in a plate thickness direction of the glass plate in the virtual lines around a center than at least one of the virtual lines at the center.

[12] The glass article manufacturing method according to any one of [1] to [11], in which each of the virtual lines has a curved portion having a curvature radius of 200 mm or less.

[13] A glass article which is a glass plate including:

a main surface;
an end surface; and
a plurality of modified portions at a constant distance from at least one end surface among the end surface, in which
an interval between the end surface at the constant distance from the plurality of modified portions and a center of the modified portions is 2.0 $\mu$m or more and less than 30 $\mu$m when viewed in a direction perpendicular to the main surface.

[14] The glass article according to [13], in which the interval between the end surface and the center of the modified portion is 2.0 $\mu$m or more and less than 20 $\mu$m when viewed in the direction perpendicular to the main surface.

[15] The glass article according to [13] or [14], in which the plurality of modified portions are provided at a pitch of 0.1 $\mu$m or more and 100 $\mu$m or less along the end surface when viewed in the direction perpendicular to the main surface.

[16] The glass article according to any one of [13] to [15], in which the modified portions each have a diameter of 0.1 $\mu$m or more and less than 60 $\mu$m when viewed in the direction perpendicular to the main surface.

[17] The glass article according to any one of [13] to [16], in which the end surface has a curved portion having a curvature radius of 200 mm or less when viewed in the direction perpendicular to the main surface.

[18] A cover glass including:
the glass article according to any one of [13] to [17].

[19] A display device including:
the glass article according to any one of [13] to [17].

Examples

Hereinafter, the present invention will be specifically described with reference to Examples, but the present invention is not limited thereto.

In Example 1 to Example 28, influences of (1) the number n of the virtual lines VL, (2) the interval d between the adjacent virtual lines VL, and (3) the presence or absence of water supply to the virtual lines VL (step S4) on the stress required for cutting were investigated. The stress required for cutting is hereinafter also referred to as a breaking stress. Among Example 1 to Example 28, Example 1, Example 2, Example 10, Example 11, and Example 18 are Comparative Examples, and Example 3 to Example 9, Example 12 to Example 17, and Example 19 to Example 28 are Inventive Examples.

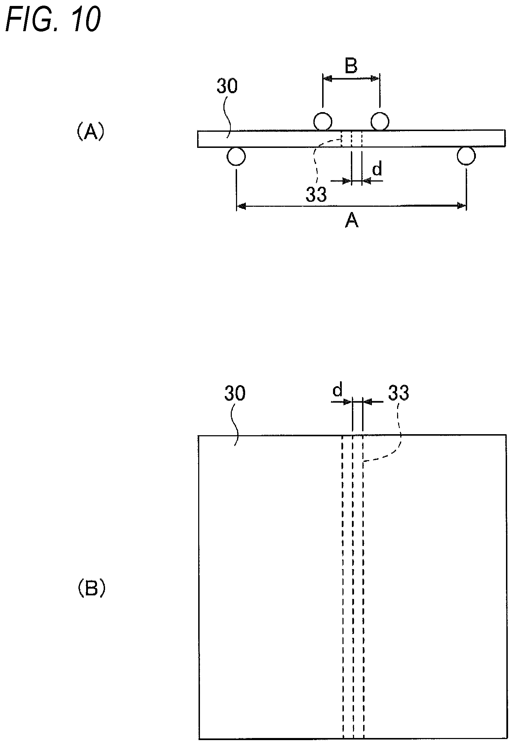

The breaking stress was measured with a four-point bending tester as illustrated in FIG. 10. As the four-point bending tester, Autograph AGS-X 10kN manufactured by Shimadzu Corporation was used. The distance A between support points was 30 mm, and the distance B between load points was 10 mm. The lowering speed of an upper bar was 1 mm/min.

As a test piece 30 in the four-point bending test, a rectangular plate (glass plate) having a length of 50 mm, a width of 50 mm and a thickness of 1.3 mm was prepared. The n virtual lines VL were set to pass through the center of the distance between two opposing sides of the glass plate and to be parallel to the remaining two sides. In the case where n was 2 or more, the n virtual lines VL were set at an equal pitch.

Irradiation conditions of the laser light LB for forming the modified portion 33 on each virtual line VL were as follows.

Oscillator: picosecond pulse laser (StarPico3, manufactured by Rofin)
Oscillation method: pulse oscillation (burst)
Light wavelength: 1064 nm
Output: 100%
Oscillation frequency: 18750 Hz
Scanning speed in in-plane direction: 93.75 mm/s
Irradiation pitch in in-plane direction: 5 $\mu$m.

In Example 1 to Example 28, except for (1) the number n of the virtual lines VL, (2) the interval d between the adjacent virtual lines VL, and (3) the presence or absence of water supply to the virtual lines VL (step S4), the test piece 30 was processed under the same processing conditions. In Example 1 to Example 28, in all virtual lines VL, the modified portion was continuously formed in the entire plate thickness direction of the glass plate. Table 1 to Table 4 show the processing conditions and measurement results for the breaking stress.

[Table 1]

|  | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|
| n | 1 | 3 | | | | | | | | | |
| d [$\mu$m] | 0.0 | 1.5 | 2.0 | 2.5 | 3.5 | 10 | 15 | 20 | 25 | 30 | 40 |
| Water | Yes | | | | | | | | | | |
| AVE [MPa] | 12.98 | 13.13 | 10.88 | 10.37 | 10.00 | 9.71 | 9.83 | 9.99 | 11.00 | 15.39 | 15.95 |

[Table 2]

|  | Ex. 1 | Ex. 12 | Ex. 13 | Ex. 14 | Ex. 15 | Ex. 16 | Ex. 17 |
|---|---|---|---|---|---|---|---|
| n | 1 | 2 | 3 | 4 | 5 | 7 | 9 |
| d [$\mu$m] | 0.0 | 10 | | | | | |
| Water | Yes | | | | | | |
| AVE [MPa] | 12.98 | 12.77 | 9.71 | 8.68 | 6.96 | 3.98 | 2.18 |

[Table 3]

|  | Ex. 18 | Ex. 19 | Ex. 20 | Ex. 21 | Ex. 22 | Ex. 23 | Ex. 24 |
|---|---|---|---|---|---|---|---|
| n | 1 | 2 | 3 | 4 | 5 | 7 | 9 |
| d [$\mu$m] | 0.0 | 10 | | | | | |
| Water | No | | | | | | |
| AVE [MPa] | 16.38 | 15.89 | 12.06 | 11.72 | 10.73 | 8.45 | 5.15 |

[Table 4]

|  | Ex. 25 | Ex. 26 | Ex. 27 | Ex. 28 | Ex. 3 | Ex. 6 | Ex. 7 | Ex. 8 |
|---|---|---|---|---|---|---|---|---|
| n | 3 | | | | | | | |
| d [$\mu$m] | 2.0 | 10 | 15 | 20 | 2.0 | 10 | 15 | 20 |
| Water | No | | | | Yes | | | |
| AVE [MPa] | 15.61 | 12.06 | 13.76 | 14.80 | 10.88 | 9.71 | 9.83 | 9.99 |

In Table 1 to Table 4, "AVE" is the average value.

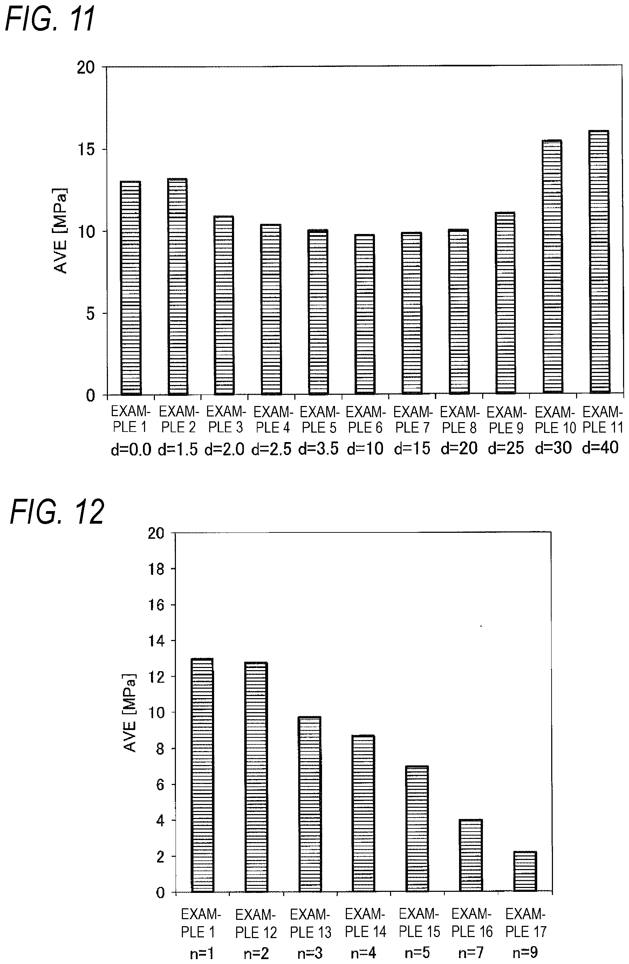

With reference to FIG. 11, the influence of the interval d between the adjacent virtual lines VL when the number n of the virtual lines VL was set to 1 or 3 and water was supplied to the virtual lines VL will be described. As seen from FIG. 11, when the plurality of virtual lines VL were set with an interval d of 2.0 $\mu$m or more and less than 30 $\mu$m, the average value AVE of the breaking stress could be reduced compared to the case where the number n of the virtual lines VL was 1. In particular, in the case where the interval d was greater than 3.5 $\mu$m and less than 20 $\mu$m, the average value AVE of the breaking stress could be significantly reduced. Note that in Example 1 to Example 11, water was supplied to the virtual lines VL, but a similar tendency can be obtained in the case where water is not supplied to the virtual lines VL.

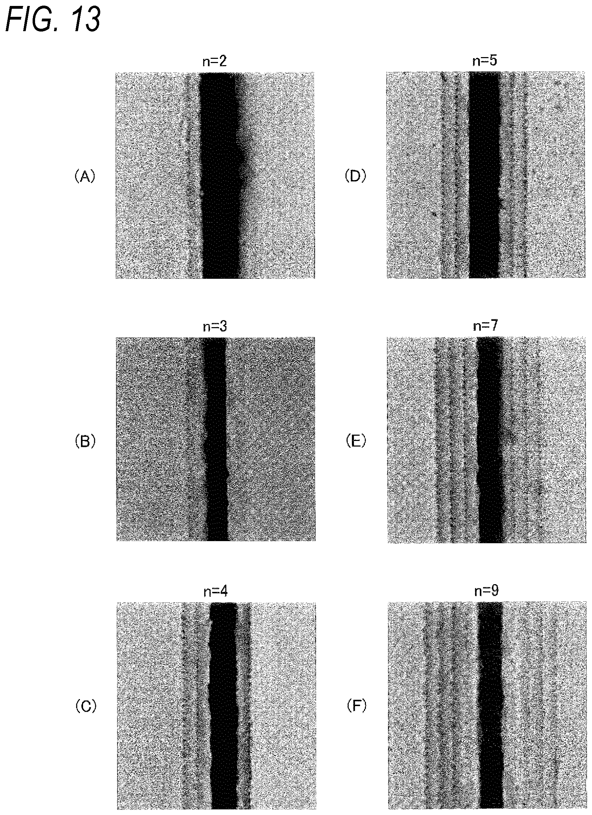

With reference to FIG. 12 and FIG. 13, the influence of the number n of the virtual lines VL when the interval d between the adjacent virtual lines VL was set to 10 $\mu$m and water was supplied to the virtual lines VL will be described. As seen from FIG. 12, as the number n of the virtual lines VL increased, the average value AVE of the breaking stress could be reduced. It is considered that this is because as the number n of the virtual lines VL increases, water is easier to permeate and stress corrosion is accelerated. In addition, as seen from FIG. 13, when n was an odd number of 3 or more, the glass plate could be cut at the virtual line VL at the center. Note that it is considered that in the case where n was an even number of 2 or more, the glass plate was cut at a weaker one in strength in the two virtual lines VL at the center.

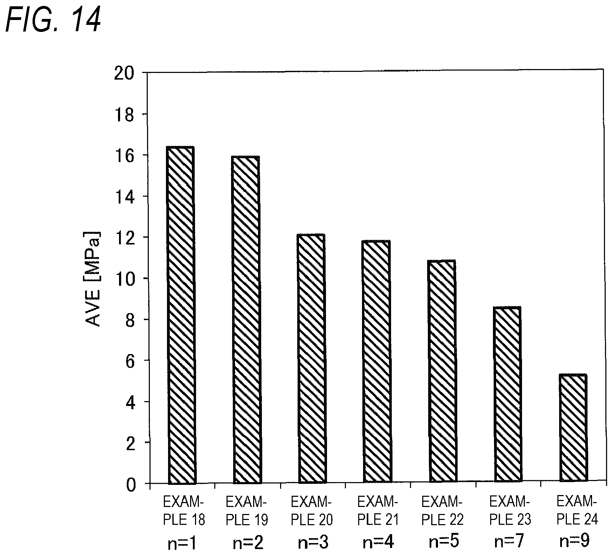

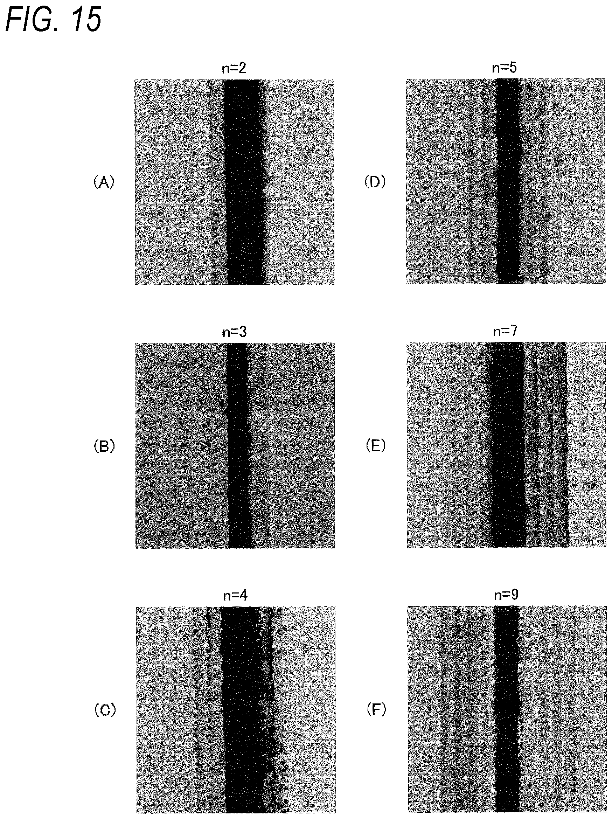

With reference to FIG. 14 and FIG. 15, the influence of the number n of the virtual lines VL when the interval d between the adjacent virtual lines VL was set to 10 $\mu$m and water was not supplied to the virtual lines VL will be described. As seen from FIG. 14, as the number n of the virtual lines VL increased, the average value AVE of the breaking stress could be reduced. In addition, as seen from FIG. 15, when n was an odd number of 3 or more, the glass plate could be cut at the virtual line VL at the center. Note that it is considered that in the case where n was an even number of 2 or more, the glass plate was cut at a weaker one in strength in the two virtual lines VL at the center.

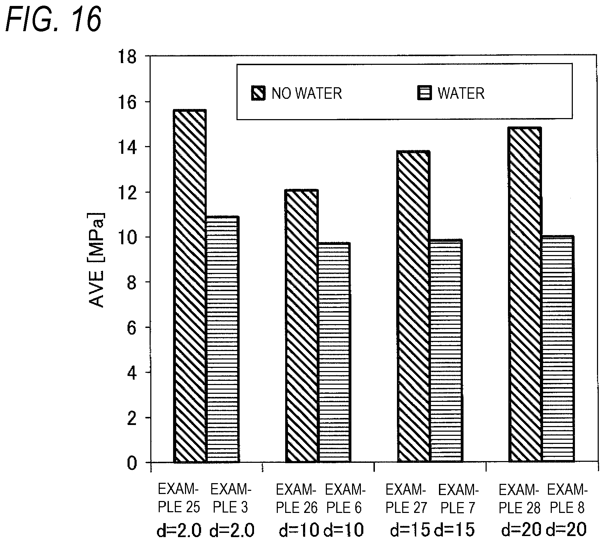

With reference to FIG. 16, the influence of the presence or absence of water supply on the virtual lines VL will be described. As seen from FIG. 16, in the case where water was supplied to the virtual lines VL, the average value AVE of the breaking stress could be reduced compared to the case where water was not supplied to the virtual lines VL.

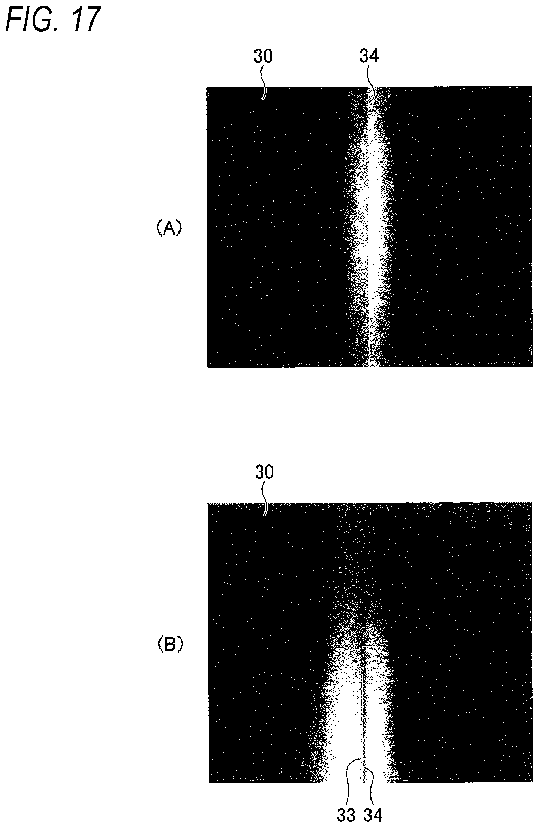

(A) in FIG. 17 is a photograph of a cut surface 34, which is a surface formed by cutting the test piece 30 in Example 1, observed with a microscope from above when irradiated with light from the side; and (B) in FIG. 17 is a photograph of the cut surface 34 of the test piece 30 in Example 6, observed with a microscope from above when irradiated with light from the side. As can be seen by comparing (A) in FIG. 17 and (B) in FIG. 17, when the modified portion 33 was formed at a predetermined distance from the cut surface 34, a contour of the cut surface 34 could be clearly observed from above.

In Example 29 and Example 30, an influence of (4) a formation range of the modified portion in the plate thickness direction of the glass plate on the stress required for cutting was investigated. Example 29 and Example 30 are Inventive Examples. As the test piece 30 in the four-point bending test, a test piece same as in Example 1 to Example 28 was prepared. Irradiation conditions of the laser light LB for forming the modified portion 33 on each virtual line VL were as follows.

Oscillator: picosecond pulse laser (StarPico3, manufactured by Rofin)
Oscillation method: pulse oscillation (burst)
Light wavelength: 1064 nm
Output: 100%
Oscillation frequency: 37500 Hz
Scanning speed in in-plane direction: 187.5 mm/s
Irradiation pitch in in-plane direction: 5 $\mu$m.

In Example 29 and Example 30, three virtual lines parallel to each other were set, the modified portion was continuously formed in the entire plate thickness direction of the glass plate for the virtual line at the center, whereas the modified portion was continuously formed in a range of about 36% (470 $\mu$m) or about 15% (200 $\mu$m) of the plate thickness (1.3 mm) of the glass plate for the virtual lines around the center (both ends). The modified portion was continuously formed to the desired depth starting from an upper surface of the test piece 30 (see (A) in FIG. 10). Table 5 shows the processing conditions and measurement results for the breaking stress. In Table 5, "AVE" is the average value.

[Table 5]

|  | Ex. 29 | Ex. 30 |
|---|---|---|
| n | 3 | |
| d [$\mu$m] | 10 | |
| t/t0 [%] | 36 | 15 |
| Water | No | |
| AVE [MPa] | 12.75 | 12.45 |

In Table 5, t/t0 (%) represents a proportion of the depth t of the modified portion formed on the virtual line around the center (both ends) to the plate thickness t0 of the glass plate.

The average value AVE of the breaking stress in Example 29 and Example 30 is lower than the average value AVE of the breaking stress in Example 18. From this, it can be seen that the breaking stress can be reduced even in the case where t/t0 (%) is less than 100%.

Although the glass article manufacturing method, the glass article, the cover glass, and the display device according to the present disclosure have been described above, the present disclosure is not limited to the above embodiments and the like. Various changes, modifications, substitutions, additions, deletions, and combinations are possible within the scope of claims. These also naturally belong to the technical scope of the present disclosure.

The present application claims priority based on Japanese Patent Application No. 2021-098236 filed with the Japan Patent Office on June 11, 2021, and the entire contents of Japanese Patent Application No. 2021-098236 are incorporated into the present application.

REFERENCE SIGNS LIST

    10 glass plate
    11 first main surface
    13 modified portion
    VL virtual line
    LB laser light

**Claims**

1. A glass article manufacturing method comprising:

    setting a plurality of virtual lines parallel to each other on a main surface of a glass plate;
    irradiating each of the plurality of virtual lines with laser light to form a modified portion in the glass plate along each of the plurality of virtual lines; and
    applying a stress to the glass plate to cut the glass plate along the virtual lines, wherein
    an interval between the adjacent virtual lines is 2.0 $\mu$m or more and less than 30 $\mu$m.

2. The glass article manufacturing method according to claim 1, wherein the interval between the adjacent virtual lines is 2.0 $\mu$m or more and less than 20 $\mu$m.

3. The glass article manufacturing method according to claim 1, wherein the number of the virtual lines is an odd number of 3 or more.

4. The glass article manufacturing method according to claim 3, wherein the number of the virtual lines is 3 or 5.

5. The glass article manufacturing method according to claim 3, wherein sandwiching one of the virtual lines, the remaining virtual lines are disposed symmetrically.

6. The glass article manufacturing method according to claim 1, wherein the plurality of virtual lines are disposed at an equal pitch.

7. The glass article manufacturing method according to claim 1, further comprising:
supplying water to the virtual lines after forming the modified portion and before cutting the glass plate.

8. The glass article manufacturing method according to claim 1, wherein a plurality of the modified portions are formed at an interval in a plate thickness direction of the glass plate.

9. The glass article manufacturing method according to claim 1, wherein a plurality of the modified portions are formed at a pitch of 0.1 $\mu$m or more and 100 $\mu$m or less along the virtual lines.

10. The glass article manufacturing method according to claim 1, wherein the modified portion has a diameter of 0.1 $\mu$m or more and less than 60 $\mu$m when viewed from a direction perpendicular to the main surface.

11. The glass article manufacturing method according to claim 1, wherein

the number of the virtual lines is 3 or more, and
the modified portion is formed continuously or intermittently in a shorter range in a plate thickness direction of the glass plate in the virtual lines around a center than at least one of the virtual lines at the center.

12. The glass article manufacturing method according to claim 1, wherein each of the virtual lines has a curved portion having a curvature radius of 200 mm or less.

13. A glass article which is a glass plate comprising:

a main surface;
an end surface; and
a plurality of modified portions at a constant distance from at least one end surface among the end surface, wherein
an interval between the end surface at the constant distance from the plurality of modified portions and a center of the modified portions is 2.0 $\mu$m or more and less than 30 $\mu$m when viewed in a direction perpendicular to the main surface.

14. The glass article according to claim 13, wherein the interval between the end surface and the center of the plurality of modified portions is 2.0 $\mu$m or more and less than 20 $\mu$m when viewed in the direction perpendicular to the main surface.

15. The glass article according to claim 13, wherein the plurality of modified portions are provided at a pitch of 0.1 $\mu$m or more and 100 $\mu$m or less along the end surface when viewed in the direction perpendicular to the main surface.

16. The glass article according to claim 13, wherein the modified portions each have a diameter of 0.1 $\mu$m or more and less than 60 $\mu$m when viewed in the direction perpendicular to the main surface.

17. The glass article according to claim 13, wherein the end surface has a curved portion having a curvature radius of 200 mm or less when viewed in the direction perpendicular to the main surface.

18. A cover glass comprising:
the glass article according to any one of claims 13 to 17.

19. A display device comprising:
the glass article according to any one of claims 13 to 17.

## FIG. 1

```
        ┌──────────────────┐
        │      START       │
        └──────────────────┘
                 │
                 ▼                          S1
        ┌────────────────────────────────┐
        │           PREPARE              │
        └────────────────────────────────┘
                 │
                 ▼                          S2
        ┌────────────────────────────────┐
        │        SET VIRTUAL LINE        │
        └────────────────────────────────┘
                 │
                 ▼                          S3
        ┌────────────────────────────────┐
        │     FORM MODIFIED PORTION      │
        └────────────────────────────────┘
                 │
                 ▼                          S4
        ┌────────────────────────────────┐
        │         SUPPLY WATER           │
        └────────────────────────────────┘
                 │
                 ▼                          S5
        ┌────────────────────────────────┐
        │             CUT                │
        └────────────────────────────────┘
                 │
                 ▼
        ┌──────────────────┐
        │       END        │
        └──────────────────┘
```

## FIG. 2

## FIG. 3

## FIG. 4

*FIG. 5*

*FIG. 6*

*FIG. 7*

*FIG. 8*

## FIG. 9

## FIG. 10

(A)

(B)

## FIG. 11

## FIG. 12

*FIG. 13*

FIG. 14

# FIG. 15

(A) n=2

(B) n=3

(C) n=4

(D) n=5

(E) n=7

(F) n=9

*FIG. 16*

*FIG. 17*

30          34

(A)

30

(B)

33 34

*FIG. 18*

10

VL-2
VL-1 VL-3
11

12          13

## INTERNATIONAL SEARCH REPORT

| | International application No. |
|---|---|
| | **PCT/JP2022/022563** |

**A. CLASSIFICATION OF SUBJECT MATTER**

*C03B 33/09*(2006.01)i; *B23K 26/53*(2014.01)i; *B26F 3/00*(2006.01)i; *B28D 5/00*(2006.01)i
FI: C03B33/09; B23K26/53; B26F3/00 A; B28D5/00 Z

According to International Patent Classification (IPC) or to both national classification and IPC

**B. FIELDS SEARCHED**

Minimum documentation searched (classification system followed by classification symbols)

C03B33/09; B23K26/53; B26F3/00; B28D5/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-128493 A (ASAHI GLASS CO LTD) 27 July 2017 (2017-07-27) claims, paragraphs [0002], [0038]-[0073], [0095]-[0096], [0161]-[0187], fig. 1-18 | 1-2, 8-10, 12-19 |
| A | | 3-7, 11 |
| A | JP 2012-224531 A (V TECHNOLOGY CO LTD) 15 November 2012 (2012-11-15) entire text, all drawings | 1-19 |
| A | JP 2015-156427 A (AISIN SEIKI) 27 August 2015 (2015-08-27) entire text, all drawings | 1-19 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2022** | **23 August 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/022563**

| Patent document cited in search report | | | Publication date (day/month/year) | Patent family member(s) | | | Publication date (day/month/year) |
|---|---|---|---|---|---|---|---|
| JP | 2017-128493 | A | 27 July 2017 | US | 2018/0186677 | A1 | |
| | | | | claims, paragraphs [0003], [0218]-[0255], [0278]-[0279], [0347]-[0370], fig. 1-18 | | | |
| | | | | WO | 2017/038853 | A1 | |
| | | | | EP | 3345877 | A1 | |
| | | | | TW | 201711978 | A | |
| | | | | CN | 107922259 | A | |
| JP | 2012-224531 | A | 15 November 2012 | (Family: none) | | | |
| JP | 2015-156427 | A | 27 August 2015 | US | 2015/0235869 | A1 | |
| | | | | entire text, all drawings | | | |
| | | | | CN | 104867881 | A | |
| | | | | TW | 201539675 | A | |

Form PCT/ISA/210 (patent family annex) (January 2015)

**REFERENCES CITED IN THE DESCRIPTION**

**Patent documents cited in the description**

- JP 2013536081 A

- JP 2021098236 A